(19) Europäisches Patentamt
European Patent Office
Office européen des brevets

(11) **EP 3 970 958 B1**

## (12) EUROPÄISCHE PATENTSCHRIFT

(45) Veröffentlichungstag und Bekanntmachung des Hinweises auf die Patenterteilung:
**20.12.2023 Patentblatt 2023/51**

(21) Anmeldenummer: **21191655.6**

(22) Anmeldetag: **17.08.2021**

(51) Internationale Patentklassifikation (IPC):
**B29D 29/06** *(2006.01)* **D06F 67/04** *(2006.01)*
**B65G 15/60** *(2006.01)* **B65G 23/04** *(2006.01)*

(52) Gemeinsame Patentklassifikation (CPC):
**B29D 29/06; D06F 67/04**

(54) **VERFAHREN ZUR HERSTELLUNG VON FÜHRUNGS- UND/ODER AUSRICHTORGANEN VON STETIGFÖRDERERN FÜR WÄSCHEREIMASCHINEN UND STETIGFÖRDERER FÜR WÄSCHEREIMASCHINEN**

METHOD FOR PRODUCING GUIDE AND / OR ALIGNMENT ELEMENTS OF CONTINUOUS CONVEYORS FOR WASHING MACHINES AND CONTINUOUS CONVEYOR FOR WASHING MACHINES

PROCÉDÉ DE FABRICATION D'ÉLÉMENTS DE GUIDAGE ET/OU D'ORIENTATION DES TRANSPORTEURS CONTINUS POUR MACHINES DE BLANCHISSERIE ET TRANSPORTEURS CONTINUS POUR MACHINES DE BLANCHISSERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.09.2020 DE 102020124186**

(43) Veröffentlichungstag der Anmeldung:
**23.03.2022 Patentblatt 2022/12**

(73) Patentinhaber: **Herbert Kannegiesser GmbH 32602 Vlotho (DE)**

(72) Erfinder:
• **Dethlaff, Soenke 32602 Vlotho (DE)**
• **Serikow, Alexander 32257 Bünde (DE)**
• **Heinz, Engelbert 32602 Vlotho (DE)**

(74) Vertreter: **Möller, Friedrich
Meissner Bolte Patentanwälte
Rechtsanwälte Partnerschaft mbB
Hollerallee 73
28209 Bremen (DE)**

(56) Entgegenhaltungen:
EP-A1- 3 085 644    EP-A2- 1 063 448
DE-A1- 3 148 413    DE-A1-102016 102 157
GB-A- 2 098 633    US-A- 3 290 195

**Beschreibung**

Die Erfindung betrifft ein Verfahren zur Herstellung von Führungs- und/oder Ausrichtorganen für Stetigförderer von Wäschereimaschinen gemäß dem Oberbegriff des Anspruchs 1. Des Weiteren betrifft die Erfindung einen Stetigförderer für Wäschereimaschinen mit wenigstens einem Führungs- und/oder Ausrichtorgan gemäß dem Oberbegriff des Anspruchs 9.

Wäschereimaschinen wie insbesondere Eingabemaschinen, Faltmaschinen und Stapler verfügen über mindestens einen Stetigförderer. Die Stetigförderer verfügen über mindestens einen umlaufend angetriebenen Transportgurt. Überwiegend weisen solche Stetigförderer mehrere mit geringfügigem Abstand nebeneinander angeordnete schmale Transportgurte auf.

Die Stetigförderer sind mit Führungs- und/oder Ausrichtorganen versehen, die gewährleisten, dass die um Trommeln geführten Transportgurte ihre vorgesehene Position in Bezug auf die Längsrichtung der Trommel während des Betriebs des Stetigförderers beibehalten.

Es sind verschiedene Führungs- und Ausrichtorgane für Stetigförderer bekannt. Diese arbeiten dynamisch, indem sie bei Abweichungen von der vorgesehenen Position in Längsrichtung der Trommeln Verstellbewegungen ausführen, um die Transportgurte wieder in die vorgesehene Sollposition zu den Trommeln zu bringen. Solche Führungs- und/oder Ausrichtorgane sind aufwendig und störanfällig.

Aus der DE 10 2016 102 157 B4 ist ein Verfahren zur Herstellung eines vorkonfektionierten Reibbelags bekannt. Solche Reibbeläge unterliegen einem gewissen Verschleiß. Deswegen ist es vorgesehen, die Instandsetzung von Antriebstrommeln von Stetigförderern wirtschaftlicher und flexibler zu gestalten. Dazu wird der Reibbelag nach seiner Herstellung außen auf die Mantelfläche einer Trommel eines Stetigförderers aufgebracht. Die Patentanmeldeschrift DE 3148413 A1 offenbart ein Verfahren zur Herstellung einer Antriebstrommel für Förderbänder für Doppelbandpressen, wobei auf dem Trommelmantel ein Reibbelag angebracht wird.

Der Erfindung liegt die Aufgabe zugrunde, ein Verfahren zur einfachen Herstellung von Führungs- und Ausrichtorganen von Stetigförderern für Wäschereimaschinen und solche Stetigförderer mit einfachen Führungs- und/oder Ausrichtorganen zu schaffen.

Ein Verfahren zur Lösung dieser Aufgabe weist die Maßnahmen des Anspruchs 1 auf. Demnach wird auf eine Mantelfläche mindestens einer Trommel, um die wenigstens ein umlaufender Transportgurt geführt ist, wenigstens ein vorzugsweise ununterbrochen und/oder lückenlos umlaufender Strang aus einem fließfähigen und/oder pastösen Material oder einem fließfähig und/oder pastös gemachten Material aufgebracht. Nach Aufbringung dieses wenigstens einen umlaufenden Strangs auf die Mantelfläche mindestens einer Trommel wird dieser mindestens eine umlaufende Strang ausgehärtet. Ein solches Führungs- und/oder Ausrichtorgan lässt sich einfach und exakt auf die Mantelfläche der jeweiligen Trommel aufbringen, zeichnet sich durch eine große Dauerhaftigkeit aus und erfordert keinerlei dynamische Verstelleinrichtungen während des Betriebs des Stetigförderers.

Bevorzugt ist das Verfahren so ausgebildet, dass außen um die jeweilige Trommel herum vorzugsweise radialgerichtet wenigstens eine Spendereinrichtung zur Erzeugung des mindestens einen Strangs und gegebenenfalls zur Fließfähigmachung desselben und mindestens eine Aushärteinrichtung angeordnet werden. Bevorzugt sind die wenigstens eine Spendereinrichtung und die mindestens eine Aushärteinrichtung mit einem Winkelversatz um die mindestens eine mit dem wenigstens einen umlaufenden Strang zu versehene Trommel angeordnet. Es kann so in aufeinanderfolgenden Schritten in einem Arbeitsgang der wenigstens eine umlaufende Strang außen um die Mantelfläche der jeweiligen Trommel herum hergestellt werden.

Eine vorteilhafte Ausgestaltungsmöglichkeit des Verfahrens sieht es vor, dass die mindestens eine mit wenigstens einem umlaufenden Strang zu versehende Trommel während der Aufbringung und der Aushärtung des wenigstens einen umlaufenden Strangs langsam drehend angetrieben wird, vorzugsweise mit weniger als sechs Umdrehungen pro Minute. Insbesondere stehen bei dieser Möglichkeit der Herstellung des wenigstens einen umlaufenden Strangs die wenigstens eine Spendereinrichtung und die mindestens eine Aushärteinrichtung, die um die betreffende Trommel herum angeordnet sind, still. Es braucht also nur die mit wenigstens einem umlaufenden Strang zu versehende Trommel zur Herstellung des wenigstens einen umlaufenden Strangs langsam gedreht zu werden. Diese Drehung lässt sich einfach realisieren und führt zu einem exakten umlaufenden endlosen und ringartigen Strang in einer Querschnittsebene der Trommel, die die Längmittelachse der Trommel exakt rechtwinklig schneidet. Das schafft die Voraussetzung für eine einwandfreie Funktion des aus wenigstens einem umlaufenden Strang gebildeten Führungs- und/oder Ausrichtorgans. Außerdem lässt sich so der mindestens eine umlaufende Strang gezielt dort auf der Mantelfläche der jeweiligen Trommel anbringen, wo sich die Sollposition des jeweiligen umlaufenden Transportgurts in Bezug auf die Längsrichtung der betreffenden Trommel befinden soll.

Insbesondere ist es vorgesehen, den wenigstens einen umlaufenden Strang oder in der Mitte zwischen mehreren nebeneinanderliegenden umlaufenden Strängen bezogen auf die Sollposition des jeweiligen umlaufenden Transportgurts in der Mitte desselben außen auf der Mantelfläche der jeweiligen Trommel anzubringen. Dadurch ist gewährleistet, dass durch das so gebildete Führungs- und/oder Ausrichtorgan der jeweilige umlaufende Transportgurt beim Betrieb des Stetigförderers stets seine Sollposition relativ zu der mit dem mindestens einen umlaufenden Strang versehenen Trommel, vorzugsweise allen Trommeln, beibehält oder automatisch in die Sollposition zurückkehrt.

Alternativ ist es denkbar, den wenigstens einen umlaufenden Strang von um die jeweilige stillstehende Trommel gemeinsam herumbewegten wenigstens einen Spendereinrichtung und mindestens einen Aushärteinrichtung zu erzeugen. Damit werden die gleichen Vorteile wie bei der Aufbringung des wenigstens einen umlaufenden Strangs um die jeweils drehend angetriebene Trommel erreicht.

Eine vorteilhafte weitere Ausgestaltungsmöglichkeit des Verfahrens sieht es vor, von der wenigstens einen Spendereinrichtung jeweils einen profilierten Strang oder alternativ auch gleichzeitig mehrere dicht nebeneinanderliegende parallele Stränge zu erzeugen. Vorzugsweise erzeugt die wenigstens eine Spendereinrichtung einen oder auch gleichzeitig mehrere nebeneinanderliegende flache Stränge. Das Längen-/Breiten- Verhältnis des jeweiligen flachen Strangs ist bevorzugt so gewählt, dass die Breite des flachen Strangs der 2- bis 5-fachen Dicke bzw. Höhe desselben entspricht. Der mindestens eine solche Strang wird von der wenigstens einen Spendereinrichtung im flachliegenden Zustand umlaufend außen auf die vorzugsweise zylindrische Mantelfläche der jeweiligen Trommel aufgebracht. Solche flachen Stränge führen zu keiner übermäßigen Dehnung des jeweiligen umlaufenden Transportgurts, reichen aber aus, dass gegebenenfalls ein einziger umlaufender flacher Strang als wirksames Führungs- und/oder Ausrichtorgan dient, das zu einem guten Geradeauslaufen des jeweiligen Transportgurts führt, so dass dieses während des Betriebs des Stetigförderers nicht oder nur in begrenztem zulässigen Umfang in Längsrichtung der Trommeln, vorzugsweise aller Trommeln, des Stetigförderers wandern kann und dadurch der wenigstens eine umlaufende Transportgurt stets seine Soll-Position - abgesehen von zulässigen Abweichungen - beibehält.

Das Verfahren kann vorteilhaft weitergebildet sein, indem nach dem Aufbringen des wenigstens einen umlaufenden Strangs auf die Mantelfläche der jeweiligen Trommel mit dem Aushärten des wenigstens einen frisch aufgebrachten umlaufenden Strangs so lange gewartet wird, bis dieser Strang sich an die Mantelfläche der Trommel angeschmiegt hat, vorzugsweise durch Verlaufen, Kriechen und/oder Fließen. Dadurch wird sichergestellt, dass die zur Mantelfläche gerichtete Unterseite des jeweiligen Strangs einen vollflächigen Kontakt mit der zylindrischen Mantelfläche einnimmt. Das führt nach dem anschließenden Aushärten des Strangs dazu, dass dieser eine vollflächige Verbindung mit der Mantelfläche der jeweiligen Trommel eingeht, vorzugsweise durch Verkleben mit derselben. Falls der jeweilige Strang in der Spendereinrichtung durch Aufheizen fließfähig gemacht worden ist und im noch heißen Zustand außen auf die Mantelfläche der jeweiligen Trommel von der Spendereinrichtung aufgetgragen worden ist, schrumpft der Strang während des Abkühlens und/oder Aushärtens, wodurch zusätzlich zur Klebeverbindung auch eine kraftschlüssige Schrumpfverbindung des jeweiligen Strangs mit der Mantelfläche der betreffenden Trommel herbeigeführt wird. Das führt zu einer besonders zuverlässigen dauerhaften und festen Verbindung des jeweiligen Strangs mit der Mantelfläche der betreffenden Trommel.

Besonders vorteilhaft ist es, wenn der wenigstens eine umlaufende Strang nach dem Aushärten derart verflossen ist, dass er einen kreisabschnittartigen Querschnitt, insbesondere flachen kreisabschnittartigen Querschnitt, aufweist. Dadurch kann der Strang mit seiner geraden Seite vollflächig an der vorzugsweise zylindrischen Mantelfläche der jeweiligen Trommel anliegen, während die Außenseite, die mit der Unterseite bzw. Innenseite des um die Trommel geführten Transportgurts in Kontakt kommt, gewölbt bzw. ballig ist. Eine solche ballige Kontaktfläche des jeweiligen Strangs mit dem betreffenden umlaufenden Transportgurt trägt zur zuverlässigen Aufrechterhaltung und/oder selbsttätigen Herbeiführung der Sollposition des Transportgurts bezüglich seiner Trommeln während des Betriebs des Stetigförderers bei.

Besonders vorteilhaft ist es, das Verfahren so auszugestalten, dass alle oder nur ausgewählte Trommeln vorzugsweise eine Antriebstrommel oder mindestens eine Umlenktrommel des jeweiligen Stetigförderers mit jeweils mindestens einem umlaufenden Strang für jeden umlaufenden, endlosen Transportgurt versehen werden. Doch ist es auch denkbar, dass sämtliche Trommel, also die üblicherweise eine Antriebstrommel und alle Umlenktrommeln des Stetigförderers mit jeweils mindestens einer umlaufenden, endlosen, kreisringförmigen Strang für jeden Transportgurt versehen wird. Vor allem im letztgenannten Falle kann ein zuverlässiger dauerhafter Lauf der Transportgurte des Stetigförderers auch bei relativ großen Trumlängen, also großen Abschnitten zwischen benachbarten Trommeln, herbeigeführt werden.

Ein Stetigförderer zur Lösung der eingangs genannten Aufgabe weist die Merkmale des Anspruchs 9 auf. Bei diesem Stetigförderer ist das mindestens eine Führungs- und/oder Ausrichtorgan von wenigstens einem außen auf einer Mantelfläche mindestens einer Trommel, um die der wenigstens eine endlos umlaufende Transportgurt geführt ist, aufgebrachter umlaufender Strang aus einem aushärtbarem Material gebildet. Bevorzugt ist der wenigstens eine Strang lückenlos umlaufend und/oder ununterbrochen umlaufend ausgebildet. Das so gebildete wenigstens eine Führungs- und/oder Ausrichtorgan zeichnet sich durch einen einfachen Aufbau aus. Es lässt sich daher nicht nur einfach herstellen; es verfügt auch über keinerlei bewegliche Teile. Das aus mindestens einem umlaufend ringförmigen Strang auf der äußeren Mantelfläche der jeweiligen Trommel gebildete Führungs- und/oder Ausrichtorgan arbeitet rein statisch ohne bewegliche Teile. Das gewährleistet eine dauerhaft zuverlässige Führung des jeweiligen umlaufenden Transportgurts auf seiner Sollposition zu den Trommeln, um die das so geführte Transportgut umläuft.

Des Weiteren ist es vorgesehen, dass die Stränge nach dem Aushärten mit der Mantelfläche derjenigen Trommel, der sie zugeordnet sind, durch Kleben und/oder Kraftschluss dauerhaft fest, insbesondere unbeweglich, verbunden sind. Die vorzugsweise zusätzliche kraftschlüssige Verbindung des jeweiligen ringförmig umlaufenden Strangs mit der Mantelfläche der jeweiligen Trommel kommt bevorzugt durch Schrumpfen beim Abkühlen der zum Aufbringen auf die Mantelfläche der Trommel fließfähig gemachten Materials des Strangs zustande.

Bei einer vorteilhaften Ausgestaltung des Stetigförderers weisen die vorzugsweise untereinander gleich ausgebildeten Stränge nach ihrem Aushärten einen kreisabschnittartigen Querschnitt auf, vorzugsweise einen flachen kreisabschnittartigen Querschnitt.

Beispielsweise verfügt ein solcher Querschnitt über eine Breite, die der 2- bis 5-fachen Dicke bzw. Höhe des jeweiligen Strangs entspricht. Dabei bzw. dadurch erhält der jeweilige Strang eine konvexe, das heißt nach außen gewölbte Außenseite. So kommt die gewölbte Außenseite des jeweiligen Strangs in Kontakt mit der Innenseite des dem Strang zugeordneten endlosen umlaufend angetriebenen Transportguts. Idealerweise liegt der mittige Scheitel an der höchsten Stelle der bogenförmigen Außenseite des jeweiligen Strangs. Beispielsweise kann sich die mittige höchste Stelle der konvexen Außenseite des Strangs unter der Mitte des Transportgurts befinden, der von dem wenigstens einen umlaufend Strang so geführt werden soll, dass dieser beim Betrieb des Stetigförderers seine Sollposition an der höchsten Stelle der bogenförmigen Außenseite des Strangs beibehält und bei eventuellen Abweichungen automatisch wieder in die Sollposition zurückkehrt.

Es gehen bevorzugt die äußeren Ränder des jeweiligen Strangs nahtlos auf die Mantelfläche der den Strang aufweisenden Trommel über.

Bevorzugt ist der jeweilige Stetigförderer so ausgebildet, dass um mindestens zwei Trommeln mehrere vorzugsweise gleich breite Transportgurte mit insbesondere einem Spalt bzw. Zwischenraum zwischen benachbarten Transportgurten geführt sind.

Gemäß einer vorteilhaften Ausgestaltungsmöglichkeit des Stetigförderers ist es vorgesehen, dass um mindestens zwei Trommeln mehrere vorzugsweise gleich breite Transportgurte mit insbesondere einem schmalen Spalt oder Zwischenraum zwischen benachbarten Transportgurten geführt sind. Das erfindungsgemäß durch wenigstens einen ringförmig umlaufenden Strang gebildete Führungs- und/oder Ausrichtorgan eignet sich besonders für mehrere nebeneinanderliegende Transportgurte, die dadurch über eine Breite verfügen, die um ein Mehrfaches kleiner ist als die Länge der Trommeln, um die die nebeneinanderliegenden schmalen Gurte geführt sind.

Insbesondere ist jedem Transportgurt, insbesondere den schmalen Transportgurten, mittig wenigstens ein umlaufender ringförmiger Strang zugeordnet. Diese Zuordnung ist vorzugsweise so getroffen, dass der einzige jedem Transportgurt zugeordnete ringförmige Strang oder der mittlere bei mehreren dem jeweiligen umlaufenden Transportgurt zugeordneten benachbarten Stränge bezogen auf die Sollposition des Transportgurts zu der betreffenden Trommel in der Mitte des jeweiligen Transportgurts angeordnet ist bzw. wird. Dabei befindet sich bevorzugt die Mitte des jeweiligen Strangs, insbesondere seine höchste Stelle, auf einer balligen Außenfläche des betreffenden Strangs in der Mitte des ihm zugeordneten umlaufend angetriebenen Transportgurts. Dadurch legt die Positionierung des jeweiligen Strangs bzw. mittigen Strangs von mehreren benachbarten Strängen die Sollposition des betreffenden Transportgurts fest, die sich dann auch in der Mitte desselben befindet. Auf diese Weise ist eine ideale Führung und Ausrichtung des betreffenden Transportgurts hinsichtlich seiner Sollposition an der vorgesehenen Stelle der Trommel, um die dieser Transportgurt geführt ist, gewährleistet.

Bei Stetigförderern mit einer als Antriebstrommel ausgebildeten Trommel und mindestens einer Umlenktrommel ist es vorgesehen, dass bei in Transportrichtung gezogenem Obertrum des jeweiligen Transportgurts der wenigstens eine dem Transportgurt zugeordnete ringförmige Strang der Mantelfläche der Antriebstrommel zugeordnet ist. Das führt zu einer besonders präzisen und dauerhaften Führung bzw. Ausrichtung des jeweiligen Transportgurts in seiner Sollposition gegenüber der Antriebstrommel und der mindestens einen nicht angetriebenen Umlenktrommel. Alternativ ist es bei geschobenem Obertrum des jeweiligen Transportgurts vorteilhaft, den mindestens einen zur Führung und Ausrichtung des Transportgurts vorgesehenen Strang dem zylindrischen Außenmantel mindestens einer Umlenktrommel, vorzugsweise aller Umlenktrommeln, zuzuordnen. Das führt auch bei geschobenem Obertrum zu einer zuverlässigen Führung und Ausrichtung des jeweiligen umlaufend angetriebenen Transportgurts, so dass diese seine vorgesehene Sollposition relativ zu der oder den Umlenktrommeln und der Antriebstrommel beibehält bzw. Abweichungen von der Sollposition selbsttätig zurückgeführt werden.

Bevorzugte Ausführungsbeispiele der Erfindung werden nachfolgend anhand der Zeichnung näher erläutert. In dieser zeigen:

Fig. 1     eine perspektivische Darstellung einer Eingabemaschine,

Fig. 2     eine perspektivische Darstellung einer Faltmaschine,

Fig. 3     eine perspektivische Darstellung eines Stetigförderers für die Eingabemaschine oder die Faltmaschine mit nur einigen dargestellten Transportgurten, die dreieckförmig um drei Trommeln geführt sind,

Fig. 4     einen mittigen Längsschnitt durch eine Trommel des Stetigförderers der Fig. 3 bei jedem Transportgurt zugeordneten einzigen ringförmig umlaufenden Strang auf der zylindrischen Mantelfläche der dargestellten Trommel,

Fig. 5      einen Stetigförderer gemäß einem zweiten Ausführungsbeispiel in einer Darstellung der Fig. 3, wobei jedem umlaufenden Transportgurt drei nebeneinanderliegende ringförmig umlaufende Stränge zugeordnet sind,

Fig. 6      einen mittigen Längsschnitt durch einen länglichen Teil einer Trommel gemäß dem Stetigförderer der Fig. 5,

Fig. 7      eine perspektivische Darstellung einer Trommel mit einer dieser außenseitig zugeordneten Spendereinrichtung und einer Aushärteinrichtung, und

Fig. 8      einen Querschnitt durch die Trommel der Fig. 7, mit der dieser außenseitig zugeordneten Spender- und Aushärteinrichtung.

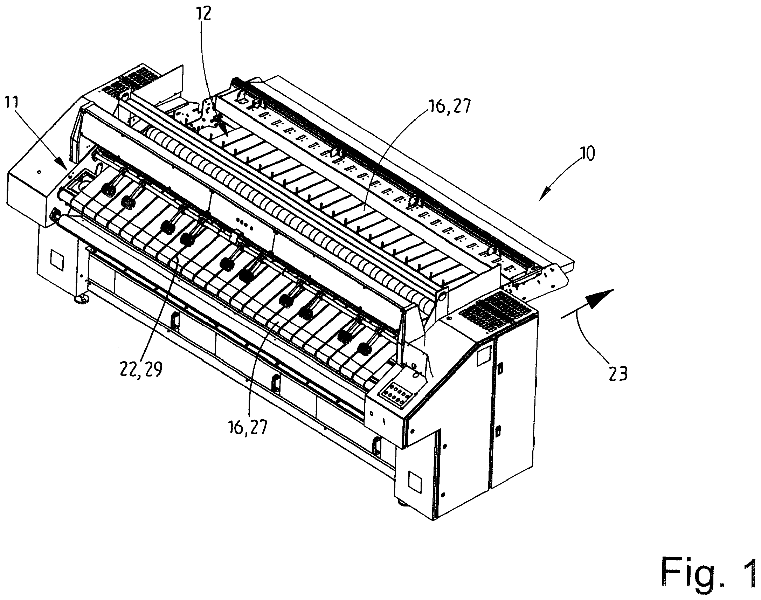

Die Fig. 1 zeigt eine Eingabemaschine 10 zum Eingeben und Zuführen ausgebreiteter, nicht gezeigter Wäschestücke zu einer nachfolgenden Wäschereimaschine, beispielsweise einer Mangel.

Die Eingabemaschine 10 verfügt über mehrere aufeinanderfolgende Stetigförderer. Bei der gezeigten Eingabemaschine 10 sind ein als Zuführförderer 11 dienender Stetigförderer und ein nachfolgend als Eingabeförderer 12 dienender Stetigförderer vorgesehen. Bei der gezeigten Eingabemaschine 10 werden zum Beispiel gewaschene Wäschestücke manuell ausgebreitet und auf den Anfang des Zuführförderers 11 aufgelegt. Vom Zuführförderer 11 werden die ausgebreiteten, vorzugsweise kleineren, Wäschestücke an den Eingabeförderer 12 übergeben, der die Wäschestücke in die nachfolgende Wäschebehandlungsmaschine, insbesondere Mangel, eingibt.

Sowohl der Zuführförderer 11 als auch der Eingabeförderer 12 verfügen über eine Vielzahl mit geringem Abstand nebeneinanderliegende, vorzugsweise gleich breite umlaufend angetriebene Transportgurte.

Die bei der Eingabemaschine 10 als Zuführförderer 11 und Eingabeförderer 12 ausgebildeten Stetigförderer mit nebeneinanderliegenden Transportgurten sind erfindungsgemäß ausgebildet und mit nach dem erfindungsgemäßen Verfahren hergestellte Führungs- und/oder Ausrichtorgane versehen.

Die Erfindung eignet sich auch für andere Eingabemaschinen, beispielsweise solche, die eine Spreizeinrichtung zum maschinellen Ausbreiten und Auflegen ausgebreiteter Wäschestücke auf den als Zuführförderer 11 dienenden Stetigförderer aufweisen. Ebenso eignet sich die Erfindung für Eingabemaschinen, bei denen die Wäschestücke automatisch in Spreizklammern der Spreizeinrichtung eingehängt und dabei von den Spreizklammern gespreizt werden. Hierbei handelt es sich um vollautomatische Eingabemaschinen.

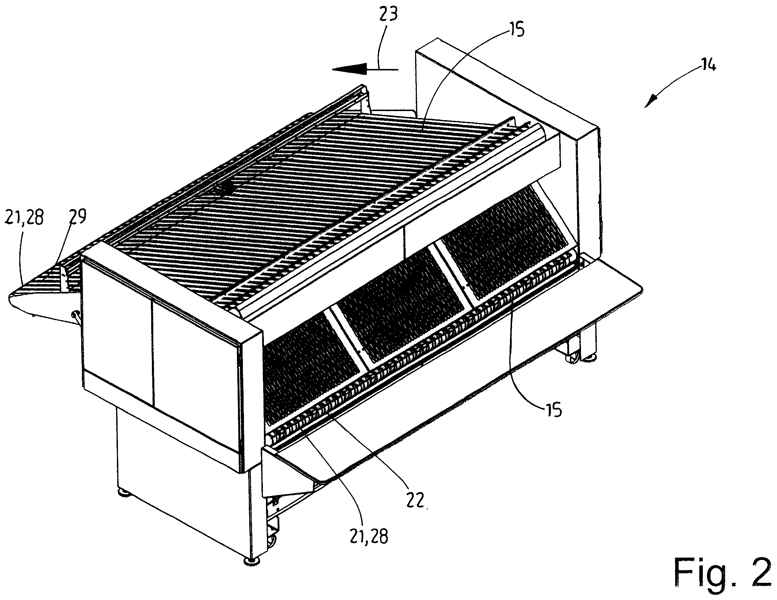

Die Fig. 2 zeigt eine Faltmaschine 14. Eine solche Faltmaschine 14 kann beispielsweise einer Mangel nachgeordnet sein. Die Faltmaschine 14 verfügt über mehrere Stetigförderer, die die auch in der Fig. 2 nicht gezeigten Wäschestücke automatisch mindestens einmal, vorzugsweise mehrfach, falten durch eine entsprechende Zuordnung und Aufeinanderfolge mehrerer als Faltförderer ausgebildete und als solche dienende Stetigförderer.

Die Faltförderer 15 der Faltmaschine 14 verfügen über mehrere mit geringem Abstand nebeneinanderliegende schmale Transportgurte.

Auch die insbesondere als Faltförderer 15 dienenden Stetigförderer der Faltmaschine 14 können in erfindungsgemäßer Weise ausgebildet sein und ihre Führungs- und/oder Ausrichtorgane nach dem erfindungsgemäßen Verfahren hergestellt worden sein.

Erfindungsgemäße Stetigförderer und nach dem erfindungsgemäßen Verfahren hergestellte Führungs- und/oder Ausrichtorgane derselben können auch bei nicht gezeigten Staplern hinter der Faltmaschine 14 vorhanden sein. Solche Stapler dienen zum Abstapeln von Wäschestücken, die von der Faltmaschinen 14 gefaltet worden sind. Auch die Stapler können mit mehreren nebeneinanderliegenden schmalen Transportgurten versehen sein.

Erfindungsgemäße Stetigförderer können auch breite Transportgurte aufweisen, die sich über die gesamte Arbeitsbreite der zuvor erwähnten Wäschereimaschinen erstrecken.

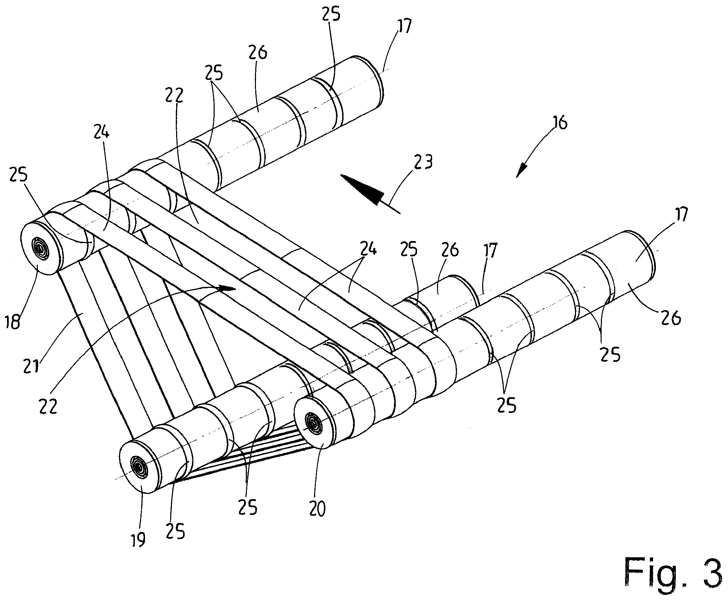

Die Fig. 3 zeigt schematisch ein Beispiel für einen Förderer, bei dem es sich um den Zuführförderer 11, den Eingabeförderer 12, den Faltförderer 15 oder auch einen Abförderer einer nicht gezeigten Abstapeleinrichtung handeln kann. Für die folgenden Erläuterungen werden diese allgemein als Stetigförderer 16 bezeichnet. Demzufolge kann der Stetigförderer 16 ein Zuführförderer 11, ein Eingabeförderer 12, ein Faltförderer 15 oder ein anderer Förderer für Wäschereimaschinen, beispielsweise Abförderer von Abstaplern hinter der Faltmaschine 14, sein.

Der in der Fig. 3 beispielhaft gezeigte Stetigförderer 16 verfügt über einen dreieckförmigen Verlauf mit drei um Drehachsen 17 drehbare Trommeln 18, 19 und 20. Um alle drei Trommeln 18, 19 und 20 sind mehrere mit Abstand nebeneinander angeordnete schmale Transportgurte 21 geführt. In der Fig. 3 sind nur drei gleich breite, endlose Transportgurte 21 dargestellt. Tatsächlich sind die Trommeln 18, 19 und 20 über ihre gesamte Breite bzw. Länge, also die gesamte Arbeitsbreite der jeweiligen Wäschereimaschine, mit Transportgurten 21 belegt. Im gezeigten Ausführungsbeispiel wären das sieben Transportgurte 21. Je nach Art des Stetigförderers 16 können die Trommeln 18, 19 und 20 länger oder auch kürzer sein, so dass mehr oder weniger als sieben Transportgurte 21 um die Trommeln, 18, 19 und 20 geführt sind. Die Erfindung ist aber nicht auf den gezeigten Stetigförderer 16 mit drei Trommeln 18, 19 und 20 beschränkt. Vielmehr eignet sich die Erfindung auch für beliebige andere Stetigförderer, vor allem solche, deren Transportgurte 21 andere als in der Fig. 3 gezeigte Verläufe aufweisen und bei denen der mindestens eine Transportgurt 21 um nur zwei oder mehr als drei Trommeln geführt ist.

Die Transportgurte 21 sind voneinander beabstandet, so dass zwischen jeweils zwei benachbarten Transportgurten 21 ein Spalt 22 entsteht. Im gezeigten Ausführungsbeispiel ist jeder Spalt 22 etwa so breit wie ein Transportgurt 21. Der jeweilige Spalt 22 kann aber auch größer oder kleiner als die Breite des jeweiligen Transportgurts 21 sein.

Beim in der Fig. 3 gezeigten Stetigförderer 16 ist die Trommel 18 umlaufend antreibbar. Die Trommel 18 dient dann als Antriebstrommel. Die beiden übrigen Trommeln 19 und 20 verfügen über keinen Antrieb. Es handelt sich hierbei um frei drehbare Umlenktrommeln. Beim in der Fig. 3 gezeigten Stetigförderer 16 verfügen alle drei Trommeln 18, 19 und 20 über einen gleichen Durchmesser. Es ist denkbar, dass die Trommeln 18, 19 und 20 unterschiedliche Durchmesser aufweisen, beispielsweise die als Antriebstrommel dienende Trommel 18 einen größeren Durchmesser aufweist als die als Umlenktrommeln dienenden Trommeln 19 und 20. Gegebenenfalls kann die Trommel 20 einen kleineren Durchmesser aufweisen als die Trommel 19 oder umgekehrt.

Die als Antriebstrommel dienende Trommel 18 wird im gezeigten Ausführungsbeispiel so angetrieben, und zwar in Bezug auf die Darstellung der Fig. 3 entgegen dem Uhrzeigersinn, dass die Laufrichtung 23 eines als Obertrum 24 dienenden Abschnitts jedes Transportgurts 21 zwischen den Trommeln 19 und 20 in Richtung des in der Fig. 3 dargestellten Pfeils 23 verläuft. In diesem Fall ist das Obertrum 24 des Stetigförderers 16 so angetrieben, dass es von der angetriebenen Trommel 18 gezogen wird, also die Laufrichtung 23 zur als Antriebstrommel dienenden Trommel 18 weist.

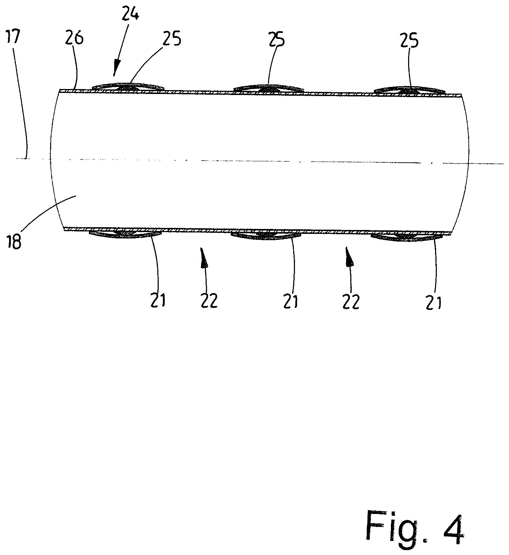

Der Stetigförderer 16 ist mit Führungs- und/oder Ausrichtorganen für die Transportgurte 21 versehen. Diese Führungs- und/oder Ausrichtorgane sind als umlaufende, ringförmige Stränge 25 ausgebildet. Die Stränge 25 führen zu einer bereichsweisen äußeren Profilierung der zylindrischen Mantelflächen 26 der Trommeln 18, 19, 20. Beim Stetigförder 16 sind alle drei Trommeln 18, 19 und 20 mit solchen Strängen 25 zur Führung und/oder Ausrichtung der Transportgurte 21 versehen. Dabei ist jedem Transportgurt 21 im Bereich jeder Trommel 18, 19 und 20 ein einziger ringförmig ununterbrochen umlaufender Strang 25 zugeordnet. Diese Zuordnung ist derart getroffen, dass bezogen auf die Sollposition des jeweiligen Transportgurts 21 in Längsrichtung der Trommel 18, 19 und 20 die Mitte eines jeweiligen Transportgurts 21 mit der Mitte des jeweiligen Strangs 25 zusammenfällt, insbesondere über der Mitte des jeweiligen Strangs 25 liegt (Fig. 4).

Alle Stränge 25 sind gleich ausgebildet. Dabei sind alle Stränge 25 außen auf eine äußere zylindrische Mantelfläche 26 der jeweiligen Trommel 18, 19 und 20 aufgebracht und hiermit dauerhaft fest verbunden, indem sie relativ zu den Trommeln 18, 19, 20 weder verdrehbar noch verschiebbar sind. Die Stränge 25 umgeben dadurch umlaufend und ringförmig die Mantelflächen 26 der Trommel 18, 19 und 20. Es wird dadurch vom jeweiligen Strang 25 eine umlaufende Erhöhung der Mantelfläche 26 der jeweiligen Trommel 18, 19 und 21 gebildet, die sich mittig unter dem jeweiligen Transportgurt 21 befindet, dem die vom jeweiligen Strang 25 gebildete umlaufende Erhöhung auf der Mantelfläche 26 zugeordnet ist. Es ist auch denkbar, dass nur eine Trommel 18, 19 oder 20, vorzugsweise die angetriebene Trommel 18, mit einem Strang 25 für jeden Transportgurt 21 versehen ist.

Jeder Strang 25 ist aus einem fließfähigen bzw. durch Erhitzen fließfähig gemachten Kunststoff gebildet, der aushärtbar ist. Nach dem Aushärten ist der Strang 25 mit der Mantelfläche 26 der jeweiligen Trommel 18, 19 und 20 durch Kleben und/oder beim Abkühlen durch Aufschrumpfen fest verbunden, so dass sich der Strang 25 beim Betrieb des Stetigförderers 16 nicht von der Mantelfläche 26 löst und auch nicht auf dieser verschiebbar sowie verdrehbar ist.

Jeder der gleich ausgebildeten Stränge 25 weist einen kreisabschnittartigen Querschnitt auf mit einer zum Transportgurt 21 weisenden konvexen und/oder bogenförmigen Außenseite und einer mit der Mantelfläche 26 fest verbundenen geraden Innenseite. Die höchste Stelle bzw. der Scheitel der konvexen Außenseite des jeweiligen Strangs 25 befindet sich in der Mitte derselben. Über diese mittige höchste Stelle des jeweiligen Strangs 25 läuft in der Sollposition des Transportgurts 21 die Mitte desselben (Fig. 4). Die um die zylindrischen Mantelflächen 26 der Trommeln 18, 19, 20 ununterbrochen verlaufenden gegenüberliegenden Ränder der konvexen Außenseiten jedes Strangs 25 gehen ohne einen Absatz oder zumindest ohne einen nennenswerten Absatz im Wesentlichen nahtlos auf die Mantelfläche 26 über.

Der halb-linsenartige Querschnitt des jeweiligen Strangs 25 verfügt über ein Längen-Breiten-Verhältnis von 2:1 bis 5:1. Demzufolge ist der jeweilige Strang 2- bis 5-mal so breit wie seine Höhe. Um die im Vergleich zur Breite geringere Höhe des jeweiligen Strangs 25 wird der ihn überlappende mittlere Abschnitt des jeweiligen Transportgurts 21 elastisch verformt, nämlich angehoben, so dass der jeweilige Transportgurt 21 im den Strang 25 überlappenden Bereich mittig aufgewölbt wird, und zwar bis zur maximalen Höhe in der Mitte des Strangs 25.

Die Breite des jeweiligen Strangs 25 ist geringer als die Breite des jeweiligen Transportgurts 21. Beispielsweise kann die Breite des Strangs 25 $\frac{1}{10}$ bis ein $\frac{5}{10}$ der Breite des Transportgurts 21 betragen, insbesondere

²/₁₀ bis ⁴/₁₀ der Breite des jeweiligen Transportgurts 21 (Fig. 4).

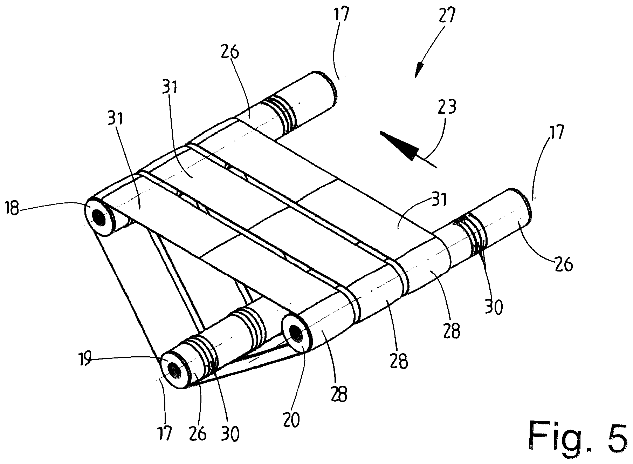

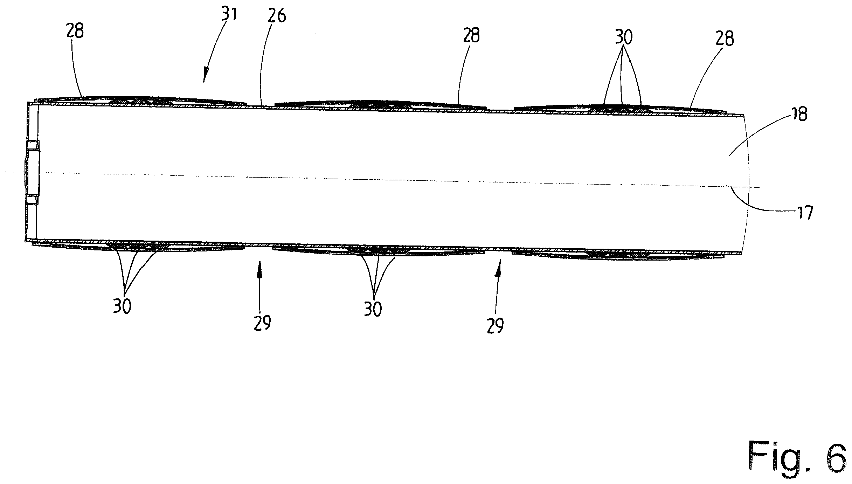

Die Fig. 5 zeigt einen Stetigförderer 27 gemäß einem zweiten Ausführungsbeispiel der Erfindung. Dieser Stetigförderer 27 kann auch zur Bildung des Zuführförderers 11, Eingabeförderers 12, Faltförderers 15 oder sonstiger Förderer von Wäschereimaschinen, beispielsweise Förderer von Stapeleinrichtungen hinter der Faltmaschine 14, dienen. Der Stetigförderer 27 der Fig. 5 unterscheidet sich von demjenigen der Fig. 3 hauptsächlich dadurch, dass er nebeneinanderliegende gleiche Transportgurte 28 aufweist, die breiter sind als die Transportgurte 21 des Ausführungsbeispiels der Fig. 3 und 4. Untereinander sind die Transportgurte 28 vorzugsweise gleich breit. Die breiteren Transportgurte 28 der Fig. 5 und 6 verfügen im Vergleich zu den schmaleren Transportgurten 21 der Fig. 3 und 4 über eine Breite, die beispielsweise der dreifachen Breite der schmaleren Transportgurte 21 entspricht.

Abgesehen von den breiteren Transportgurten 28 ist der Stetigförderer 27 genauso ausgebildet wie der Stetigförderer 16, so dass für die Trommeln 18 bis 20 des Stetigförderers 27 die gleichen Bezugsziffern des Stetigförderers 16 verwendet werden und auch davon ausgegangen wird, dass es sich bei der Trommel 18 um die angetriebene Trommel des Stetigförderers 27 handelt, während die Trommeln 19 und 20 frei drehbare Umlenktrommeln sind.

Der Stetigförderer 27 weist mehrere gleiche, insbesondere gleich breite Transportgurte 28 auf, die mit Abstand nebeneinander um die Trommeln 18, 19 und 20 geführt sind. Zwischen den breiteren Transportgurten 28 sind schmalere Spalte 29 gebildet als zwischen den schmaleren Transportgurten 21 des ersten Ausführungsbeispiels. Beispielsweise beträgt die Breite des schmaleren Spalts 29 zwischen zwei benachbarten breiteren Transportgurten 28 nur etwa 5% bis 30%, insbesondere 10% bis 20%, des jeweiligen Transportgurts 28.

Zur Führung und/oder Ausrichtung der weiteren Transportgurte 28 dienen beim gezeigten zweiten Ausführungsbeispiel jeweils mehrere nebeneinander angeordnete kappenartige Stränge 30. Gemäß den Fig. 5 und 6 sind den Trommeln 18, 19 und 20 für jeden breiten Transportgurt 28 drei nebeneinanderliegende Stränge 30 zugeordnet. Es wird dadurch jedes Führungs- und/oder Ausrichtorgan durch drei Stränge 30 gebildet. Die drei Stränge 30 liegen entweder mit geringem Abstand nebeneinander oder sind (Fig. 6) unmittelbar aneinander angrenzend nebeneinander angeordnet, wobei sich die Außenränder benachbarter Stränge 30 berühren. Die drei Stränge 30 sind dem jeweiligen Transportgurt 28 derart zugeordnet, dass die Mitte des mittleren Strangs 30 unterhalb der Mitte des jeweiligen breiteren Transportgurts 28 liegt. Insofern wird Bezug genommen auf die Beschreibung des ersten Ausführungsbeispiels der Fig. 3 und 4.

Die drei unmittelbar nebeneinanderliegenden Stränge 30 zur Bildung eines jeweiligen Führungs- und/oder Ausrichtorgans sind beim gezeigten Ausführungsbeispiel gleich ausgebildet, insbesondere gleich groß und mit gleichem Querschnitt versehen. Der Querschnitt der gleichen Stränge 30 entspricht vorzugsweise dem Querschnitt des Strangs 25 des ersten Ausführungsbeispiels der Fig. 3 und 4. Auf die dazugehörende Beschreibung wird Bezug genommen. Denkbar ist es aber auch, die beiden äußeren Stränge etwas kleiner auszubilden als den Strang 30, insbesondere etwas niedriger und/oder schmaler.

Die Anordnung, Befestigung oder Aufbringung der drei im Querschnitt kreisabschnittartigen, nebeneinanderliegenden Stränge 30 jedes Führungs- und/oder Ausrichtorgans der Fig. 5 und 6 entspricht derjenigen des ersten Ausführungsbeispiels der Fig. 3 und 4, worauf Bezug genommen wird.

Es sind alternative Ausführungsbeispiele von Stetigförderern denkbar, bei denen die Führungs- und/oder Ausrichtorgane aus zwei oder mehr als drei nebeneinanderliegenden Strängen gebildet sind. Bei zwei oder vier nebeneinanderliegenden Strängen verläuft die Mitte des diesen zugeordneten Transportgurts 28 zwischen den beiden oder beiden mittigen Strängen.

Es ist nicht erforderlich, dass gemäß den Fig. 3 bis 6 alle Trommeln 18, 19 und 20 mit von Strängen 25 bzw. 30 gebildeten Führungs- und/oder Ausrichtorganen versehen sind. Bei den zuvor beschriebenen Ausführungsbeispielen mit von der angetriebenen Trommel 18 gezogenen Obertrumen 24 und 31 der Transportgurte 21 und 28 kann es ausreichen, nur der jeweils angetriebenen Trommel 18 von Strängen 25 bzw. 30 gebildete Führungs- und Ausrichtorgane zuzuordnen. Die Mantelflächen 26 der nicht angetriebenen freilaufenden Trommeln 19 und 20 verfügen dann über keine aufgrund der Stränge 25, 30 profilierten Mantelflächen, sondern über glatte Mantelflächen.

Wenn hingegen die Obertrume 24, 31 der Transportgurte 21, 28 geschoben werden, indem nicht die in Laufrichtung 23 hintenliegende Trommel 18 angetrieben wird, sondern die in Laufrichtung 23 vornliegende Trommel 20 oder gegebenenfalls auch die Trommel 19, kann es ausreichen, wenn nur die dann als Umlenktrommeln dienenden Trommeln 18 und 19 bzw. 18 und 20 mit von Strängen 25 bzw. 30 gebildeten Führungs- und/oder Ausrichtorganen versehen sind. Bei geschobenen Obertrumen 24, 31 braucht dann die jeweils angetriebene Trommel 19 bzw. 20 keine von einem Strang 25 oder mehreren Strängen 30 gebildeten Führungs- und/oder Ausrichtorgane aufzuweisen.

Die als Führungs- und/oder Ausrichtorgane dienenden Stränge 25 bzw. 30 der Erfindung wirken folgendermaßen:

Infolge der über der Mitte des jeweiligen mittigen Strangs 25, 30 oder bei einer geraden Anzahl nebeneinanderliegender Stränge zwischen den innenliegenden Strängen liegenden Mitte des jeweiligen Transportgurts 21 bzw. 28 wird dieser mittig von der zylindrischen Mantelfläche 26 der entsprechenden Trommel 18, 19 bzw. 20 wegbewegt, also nach außen aufgewölbt. Infolge dieser Aufwölbung erhält der jeweilige Transportgurt 21 bzw. 28 dort, wo sich die Stränge 25 bzw. 30 außen auf der Mantelfläche 26 der jeweiligen Trommel 18, 19 bzw. 20 befinden, eine Vorspannung. Die Vorspannung führt dazu, dass der Transortgurt 21, 28 mit seiner Mitte über der Mitte des einzigen Strangs 25 oder des mittleren Strangs 30 bzw. bei einer geraden Anzahl von Strängen zwischen den mittleren Strängen geführt wird. Die Transportgurte 21 bzw. 28 werden so von den durch einen Strang 25 oder mehrere nebeneinanderliegende Stränge 30 gebildeten Führungs- und Ausrichtorganen in der vorgesehenen Position in Bezug auf die Längsrichtung der Trommel 18, 19 und 20, nämlich ihre Sollposition, geführt gehalten bzw. festgelegt. Das gilt auch für den Fall, dass nicht alle Trommeln 18, 19 und 20 des betreffenden Stetigförderers 16 bzw. 27 mit von Strängen 24 bzw. 30 gebildeten Führungs- und Ausrichtorganen versehen sind.

Sollte es aus irgendwelchen Gründen zu Abweichungen der Transportgurte 21, 28 von ihrer vorgesehenen Soll- bzw. Nennposition relativ zu den Trommeln 18, 19 bzw. 20 kommen, also die Mitten derselben neben der Mitte des einzigen Strangs 25 bzw. mehrerer nebeneinanderliegender Stränge 30 liegen, wandert die Aufwölbung der Transportgurte 21 bzw. 28 aus der Mitte heraus. Die dann außermittige Aufwölbung der Transportgurte 21 bzw. 28 führt dazu, dass diese selbsttätig längs der Drehachse 17 der Trommeln 18, 19 und 20 wieder in die Sollposition verschoben werden, bei der die Mitten der Transportgurte 21, 28 mittig über dem einzigen Strang 28 oder der Mitte mehrerer nebeneinanderliegender Stränge 30 bewegt wird.

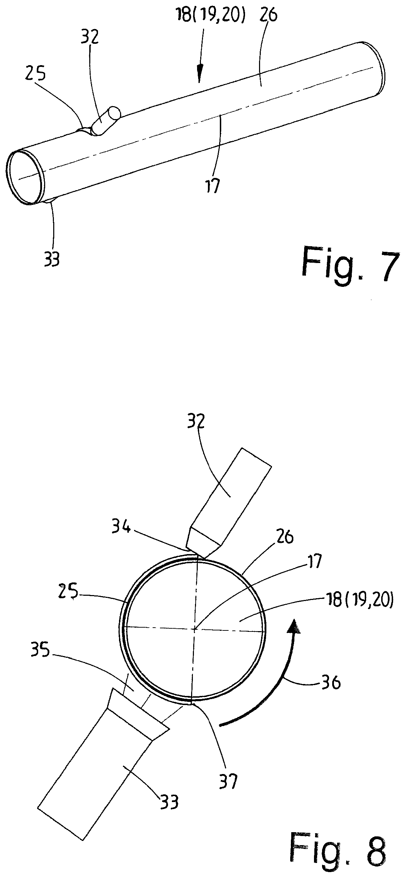

Nachfolgend wird das erfindungsgemäße Verfahren zur Herstellung der Führungs- und/oder Ausrichtorgane des Stetigförderers 16 mit einzelnen Strängen 25 (Fig. 3 und 4) erläutert:
Die Herstellung des jeweiligen Strangs 25 aus aushärtbarem Kunststoff, insbesondere thermoplastischem Kunststoff, erfolgt mit jeweils einer in den Fig. 7 und 8 gezeigten Spendereinrichtung 32 und Aushärteinrichtung 33. Diese sind etwa radialgerichtet außen um die Mantelfläche 26 der jeweiligen Trommel 18, 19 bzw. 20 herum angeordnet. Diese Anordnung ist bezogen auf den Umfang der Mantelfläche 26 mit einem Winkelversatz getroffen, und zwar so, dass sich die Spendereinrichtung 32 und Aushärteinrichtung 33 etwa gegenüberliegen. Die Spendereinrichtung 32 weist am zur Mantelfläche 26 der jeweiligen Trommel 18, 19 bzw. 20 gerichteten Austrittsende 34 eine geringfügig von der Mantelfläche 26 der jeweiligen Trommel 18, 19, 20 beabstandete Austrittsöffnung oder Düse zur Erzeugung des fortlaufenden Strangs 25 auf.

Falls das aushärtbare Material zur Bildung des Strangs 25 im nicht ausgehärteten Zustand fließfähig bzw. pastös ist, kann der Strang 25 durch Ausdrücken des pastösen oder fließfähigen Materials aus der Spendereinrichtung 32 außen auf die Mantelfläche 26 aufgebracht werden. Falls das Material nicht oder nicht ausreichend fließfähig ist, kann es vorgesehen sein, dass die Spendereinrichtung 32 eine Heizeinrichtung aufweist, womit das Material zur Bildung des Strangs 25 vor der Aufbringung auf die Mantelfläche 26 aufheizbar ist, um ausreichend fließfähig gemacht zu werden.

Die Aushärteinrichtung 33 ist nach Art einer Lampe zur Erzeugung von vorzugsweise UV-Licht ausgebildet. Die Aushärteinrichtung 33 erzeugt ein auf den von der Spendereinrichtung 32 außen auf die Mantelfläche 26 aufgebrachten Strang 25 gerichtetes Strahlenbündel 35, das geringfügig diffus, aber auch zylindrisch oder gegebenenfalls fokussiert sein kann. Durch insbesondere die UV-Strahlen des Strahlenbündels 35 wird der von der Spendereinrichtung 32 auf die Mantelfläche 26 der jeweiligen Trommel 18, 19 bzw. 20 aufgebrachte Strang 25 ausgehärtet.

Die Spendereinrichtung 32 und die Aushärteinrichtung 33 sind dem Umfang der Mantelfläche 26 mit Winkelversatz zugeordnet, liegen etwa einander gegenüber. Dadurch findet das Aushärten des pastösen fließfähigen Materials zur Bildung des Strangs 25 nicht so gleich mit der Aufbringung des Strangs 25 auf der Mantelfläche 26 statt, sondern mit einem Zeitversatz. Dieser Zeitversatz ermöglicht es dem auf die Mantelfläche 26 von der Spendereinrichtung 32 aufgebrachten pastösen Material zu fließen, insbesondere auseinanderzufließen, so dass es sich an die zylindrische Mantelfläche 26 der jeweiligen Trommel 18, 19, 20 anpasst, insbesondere sich die Unterseite des Strangs 25 vollständig an die Mantelfläche 26 anschmiegt, damit der Strang 26 seine kreisabschnittartige Gestalt erhält. Gegebenenfalls kann bis zum Aushärten der Strang 25 auch noch abkühlen, falls er in der Spendereinrichtung 32 zum Auftragen auf die Mantelfläche 26 erwärmt bzw. aufgeheizt worden ist.

Beim in den Fig. 7 und 8 gezeigten Ausführungsbeispiel sind sowohl die Spendereinrichtung 32 als auch die Aushärteinrichtung 33 der jeweiligen Trommel 18, 19 bzw. 20 von außen her ortsfest zugeordnet, so dass sie ihre in der Fig. 8 gezeigte Konfiguration zumindest während der Herstellung des Strangs 25 nicht verändern. Hingegen wird während der Aufbringung des Strangs 25 die jeweilige Trommel 18, 19 bzw. 20 langsam kontinuierlich um ihre Drehachse 17 gedreht, beispielsweise in der in der Fig. 8 mit einem Pfeil angedeuteten Drehrichtung 36. Diese Drehung erfolgt so langsam, dass das von der Aushärteinrichtung 33 erzeugte Strahlenbündel 35 mit UV-Licht genügend Zeit hat, den Strang 25 auszuhärten, indem ein Abschnitt des Strangs 25 so lange im Einflussbereich des Strahlenbündels 35, insbesondere des UV-Lichts desselben, bleibt, bis die vollständige Aushärtung des Strangs 25 erfolgt ist. Vorzugsweise wird dazu die Trommel 18, 19 oder 20 mit einer Drehzahl von weniger als 6 Umdrehungen pro Minute drehend angetrieben.

Es ist auch möglich, zur Herstellung des jeweiligen Strangs 25 die Spendereinrichtung 32 und die Aushärteinrichtung 33 gemeinsam als Einheit um die jeweilige Trommel 18, 19 bzw. 20 herumzubewegen. Dann brauchen die Trommeln 18, 19, 20 zur Herstellung des jeweiligen Strangs 25 nicht drehend angetrieben zu werden.

Die Aufbringung des Strangs 25 auf die Mantelfläche 26 von der Spendereinrichtung 32 und die Aushärtung des Strangs 25 durch die Aushärteinrichtung 33 erfolgt so lange, bis die Trommel eine vollständige Umdrehung vollzogen hat, also der Anfang 37 des Strangs 25 das Austrittsende 34 bzw. die Düse der Spendereinrichtung 32 erreicht hat. Dann wird die Auftragung des Strangs 25 durch Unterbrechung des Materialaustritts aus dem Austrittsende 34 der Spendereinrichtung 32 unterbrochen und die Trommel 18, 19 bzw. 20 mit dem nun vollständig hergestellten ringförmigen Strang 25 weiterbewegt, bis auch das mit dem Anfang 37 des Strangs 25 zusammenfallende Ende desselben an der Aushärteinrichtung 33 vorbeigelaufen ist. Dadurch kommt es zur vollständigen Aushärtung des gesamten Strangs 25, indem der gesamte Strang 25 an der Aushärteinrichtung 33 einmal vorbeigelaufen ist. Alternativ kann aber auch so vorgegangen werden, dass nach dem Stoppen der Herstellung des Strangs 25 durch die Spendereinrichtung 32 die Trommel 18, 19 bzw. 20 noch weitere Male vollständig an der Aushärteinrichtung 33 vorbeibewegt wird, falls mit einer Umdrehung die vollständige Aushärtung des Strangs 25 mittels der Aushärteinrichtung 33 nicht erfolgen kann.

Nachdem die Herstellung des einem ersten Transportgurt 21 zugeordneten Strangs 25 abgeschlossen ist, wird die Trommel 18, 19 bzw. 20 längs ihrer Drehachse 17 so weit verfahren, bis die Spendereinrichtung 32 und die Aushärteinrichtung 33 eine Position erreicht haben, die der Endposition des nächstfolgenden Transportgurts 21 entspricht und dann - wie vorstehend beschrieben - der Strang 25 für den nächsten Transportgurt 21 hergestellt. Alternativ ist es aber auch denkbar, dass zur Herstellung des nächsten Strangs 25 nicht die Trommel 18, 19 bzw. 20 entlang ihrer Drehachse 17 verschoben wird, sondern die Spendereinrichtung 32 und die Aushärteinrichtung 33 gleichermaßen auf parallel zur Drehachse 17 verlaufenden Bahnen längs der Trommel 18, 19 oder 20 verfahren werden.

Die Herstellung des Führungs- und/oder Ausrichtorgans mit mehreren nebeneinanderliegenden Stränge 30, insbesondere drei nebeneinanderliegenden Strängen 30 gemäß dem Ausführungsbeispiel der Fig. 5 und 6, erfolgt prinzipiell genauso wie zuvor beschrieben. Die dem gleichen Transportgurt 28 zugeordneten nebeneinanderliegenden Stränge 30 werden dann von der jeweils einen Strang pro Arbeitsgang herstellenden Spendereinrichtung 32 und Aushärteinrichtung 33 nacheinander vorgenommen durch entsprechendes Axialverfahren entweder der jeweiligen Trommel 18, 19 oder 20 oder der Spendeeinrichtung 32 und der Aushärteinrichtung 33.

Es ist auch denkbar, bei Führungs- und Ausrichtorgangen mit mehreren dicht nebeneinanderliegenden Strängen, beispielsweise drei Stränge 30 gemäß dem Ausführungsbeispiel der Fig. 5, die Spendereinrichtung 32 mit mehreren, zum Beispiel drei, in Längsrichtung der Trommel 18, 19 bzw. 20 nebeneinanderliegenden Austrittsenden 34 bzw. Austrittsdüsen zu versehen, deren Abstand dem Abstand der in den Fig. 5 und 6 gezeigten Stränge 30 entspricht. Dann werden alle aufeinanderfolgenden bzw. benachbarten Stränge 30 von der Spendereinrichtung 32 in einem Arbeitsgang hergestellt und auch mit einer ein entsprechendes Strahlenbündel 35 aufweisenden Aushärteinrichtung 33 gleichzeitig und zusammen ausgehärtet. In diesem Falle ist eine axiale Verschiebung der Trommel 18, 19 und 20 bzw. der Spendeeinrichtung 32 und der Aushärteinrichtung 33 auch hier nur erforderlich, um die nebeneinanderliegenden Stränge 30 für den nächsten Transportgurt 28 außen auf die Mantelfläche 26 der jeweiligen Trommel 18, 19 und 20 aufzubringen.

**Bezugzeichenliste:**

| | |
|---|---|
| 10 | Eingabemaschine |
| 11 | Zuführförderer |
| 12 | Eingabeförderer |
| 14 | Faltmaschine |
| 15 | Faltförderer |
| 16 | Stetigförderer |
| 17 | Drehachse |
| 18 | Trommel |
| 19 | Trommel |
| 20 | Trommel |
| 21 | Transportgurt |
| 22 | Spalt |
| 23 | Laufrichtung |
| 24 | Obertrum |
| 25 | Strang |
| 26 | Mantelfläche |
| 27 | Stetigförderer |
| 28 | Transportgurt |
| 29 | Spalt |
| 30 | Strang |
| 31 | Obertrum |
| 32 | Spendereinrichtung |
| 33 | Aushärteinrichtung |
| 34 | Austrittsende |
| 35 | Strahlenbündel |
| 36 | Drehrichtung |
| 37 | Anfang |

**Patentansprüche**

1. Verfahren zur Herstellung von Führungs- und/oder Ausrichtorganen wenigstens eines von um Mantelflächen (26) mindestens zweier Trommeln (18, 19, 20) endlos geführten Transportgurts (21, 28) von Stetigförderern (16, 27) von Wäschereimaschinen, **dadurch gekennzeichnet, dass** zur Bildung der Führungs- und/oder Ausrichtorgane auf die Mantelfläche (26) mindestens einer Trommel (18, 19, 20) wenigstens ein umlaufender Strang (25, 30) aus einem fließfähigen und/oder pastösen aushärtbarem Material aufgebracht wird, und anschließend an die Aufbringung des wenigstens einen umlaufenden Strangs (25, 30) auf die Mantelfläche (26) der mindestens einen Trommel (18, 19, 20) dieser wenigstens eine umlaufende Strang (25, 30) ausgehärtet wird.

2. Verfahren nach Anspruch 1, **dadurch gekennzeichnet, dass** außen um die jeweilige Trommel (18, 19, 20) herum vorzugsweise radial gerichtet wenigstens eine Spendereinrichtung (32) zur Erzeugung des mindestens einen Strangs (25, 30) und wenigstens eine Aushärteeinrichtung (33) versetzt zueinander angeordnet werden, insbesondere mit einem Winkelversatz.

3. Verfahren nach Anspruch 1 oder 2, **dadurch gekennzeichnet, dass** die mit wenigstens einem umlaufenden Strang (25, 30) zu versehende Trommel (18, 19, 20) während der Aufbringung und/oder der Aushärtung des wenigstens einen Strangs (25, 30) langsam drehend angetrieben wird, vorzugsweise mit weniger als 6 Umdrehungen pro Minute.

4. Verfahren nach einem der Ansprüche 2 oder 3, **dadurch gekennzeichnet, dass** der wenigstens eine Strang (25, 30) von um die jeweils stillstehende Trommel (18, 19, 20) gemeinsam herumbewegter wenigstens einen Spendereinrichtung (32) und Aushärteinrichtung (33) erzeugt wird.

5. Verfahren nach einem der Ansprüche 2 bis 4, **dadurch gekennzeichnet, dass** von der wenigstens einen Spendereinrichtung (32) wenigstens ein profilierter Strang (25, 30) erzeugt wird, vorzugsweise einer flacher Strang, dessen Breite der 2- bis 5-fachen Dicke bzw. Höhe des betreffenden Strangs (25, 30) entspricht.

6. Verfahren nach einem der vorhergehenden Ansprüche, **dadurch gekennzeichnet, dass** nach dem Aufbringen des wenigstens einen umlaufenden Strangs (25, 30) auf die Mantelfläche (26) der jeweiligen Trommel (18, 19, 20) mit dem Aushärten des Strangs (25, 30) so lange gewartet wird, bei der Strang (25, 30) sich durch Fließen bzw. Kriechen an die vorzugsweise zylindrische Mantelfläche (26) der jeweiligen Trommel (18, 19, 20) angeschmiegt hat.

7. Verfahren nach einem der vorhergehenden Ansprüche, **dadurch gekennzeichnet, dass** der wenigstens eine umlaufende Strang (25, 30) nach dem Aushärten derart verflossen ist, dass er einen Querschnitt aufweist, der kreisabschnittartig ist.

8. Verfahren nach einem der vorhergehenden Ansprüche, **dadurch gekennzeichnet, dass** alle oder nur ausgewählte Trommel (18, 19, 20) vorzugsweise eine Antriebstrommel oder mindestens eine Umlenktrommel, mit jeweils mindestens einem jeden umlaufenden Transportgurt (21, 28) zugeordneten Strang (25, 30) versehen werden.

9. Stetigförderer für Wäschereimaschinen, mit mindestens zwei Trommeln (18, 19, 20) und wenigstens einem um die Trommeln (18, 19, 20) geführten umlaufenden Transportgurt (21, 28) und wenigstens einem mindestens einer Trommel (18, 19, 20) zugeordnetes Führungs- und/oder Ausrichtorgan für den wenigstens einen Transportgurt (21, 28), **dadurch gekennzeichnet, dass** das wenigstens eine Führungs- und/oder Ausrichtorgan von wenigstens einem außen auf eine Mantelfläche (26) mindestens einer Trommel (18, 19, 20) aufgebrachten umlaufenden Strang (25, 30) aus einem aushärtbarem Material gebildet ist, und anschließend an die Aufbringung dieses wenigstens einen umlaufenden Strangs (25, 30) auf der Mantelfläche (26) der mindestens einen Trommel (18, 19, 20) ein Aushärten desselben erfolgt.

10. Stetigförderer nach Anspruch 9, **dadurch gekennzeichnet, dass** der oder jeder umlaufende Strang (23, 30) ununterbrochen und/oder mit gleichem Querschnitt die oder die jeweilige Trommel (18, 19, 20) außen umgibt.

11. Stetigförderer nach Anspruch 9 oder 10, **dadurch gekennzeichnet, dass** eine freiliegende Außenseite des oder jedes Strangs (23, 30) quer zur Umfangsrichtung der den jeweiligen Strang (23, 30) aufweisenden Trommel (18, 19, 20) nach außen gewölbt ist.

12. Stetigförderer nach einem der Ansprüche 9 bis 11, **dadurch gekennzeichnet, dass** der wenigstens eine Strang (25, 30) nach dem Aushärten mit der Mantelfläche (26) der oder der jeweiligen Trommel (18, 19, 20) durch Kleben und/oder Schrumpfen dauerhaft fest, insbesondere unverschieblich und unverdrehbar, verbunden ist.

13. Stetigförderer nach einem der Ansprüche 9 oder 12, **dadurch gekennzeichnet, dass** der oder jeder Strang (25, 30) nach dem Aushärten einen kreisabschnittartigen Querschnitt aufweist, vorzugsweise mit einer Breite, die der 2- bis 5-fachen Dicke bzw. Höhe des jeweiligen ausgehärteten Strangs (25, 30) entspricht.

**14.** Stetigförderer nach einem der Ansprüche 9 bis 13, **dadurch gekennzeichnet, dass** um die mindestens zwei Trommeln (18, 19, 20) mehrere vorzugsweise gleich breite Transportgurte (21, 28) mit insbesondere Zwischenräume bzw. Spalte (22, 29) zwischen benachbarten Transportgurten (21, 28) geführt sind, und jedem Transportgurt (21, 28) vorzugsweise mittig wenigstens ein umlaufender Strang (25, 30) auf der Mantelfläche (26) mindestens einer der Trommeln (18, 19, 20) zugeordnet ist.

**15.** Stetigförderer nach einem der Ansprüche 9 bis 14, **dadurch gekennzeichnet, dass** die Trommeln (18, 19, 20) als eine Antriebstrommel und mindestens eine Umlenktrommel ausgebildet sind und bei in Laufrichtung (23) gezogenem Obertrum (24, 31) des jeweiligen Transporgurts (21, 28) der wenigstens eine dem Transportgurt (21, 28) zugeordnete Strang (25, 30) mindestens der Antriebstrommel zugeordnet ist oder bei geschobenem Obertrum (24, 31) des jeweiligen Transportgurts (21, 28) der wenigstens eine dem Transportgurt (21, 28) zugeordnete Strang (25, 30) wenigstens einer Umlenktrommel, vorzugsweise allen Umlenktrommeln, zugeordnet ist.

**Claims**

**1.** Method for producing guide and/or alignment elements for at least one transporting belt (21, 28) of continuous conveyors (16, 27) of laundry machines, which at least one transporting belt is guided endlessly around lateral surfaces (26) of at least two drums (18, 19, 20), **characterized in that**, for the purpose of forming the guide and/or alignment elements, at least one encircling strand (25, 30) composed of a flowable and/or pasty curable material is applied to the lateral surface (26) of at least one drum (18, 19, 20) and, following the application of the at least one encircling strand (25, 30) to the lateral surface (26) of the at least one drum (18, 19, 20), said at least one encircling strand (25, 30) is cured.

**2.** Method according to Claim 1, **characterized in that** at least one dispenser device (32) for producing the at least one strand (25, 30) and at least one curing device (33) are arranged, preferably directed radially, around the outside of the respective drum (18, 19, 20), so as to be offset from one another, in particular with an angular offset.

**3.** Method according to Claim 1 or 2, **characterized in that** the drum (19, 19, 20) to be provided with at least one encircling strand (25, 30) is driven in rotation at low speed, preferably at less than 6 revolutions per minute, during the application and/or the curing of the at least one strand (25, 30).

**4.** Method according to either of Claims 2 and 3, **characterized in that** the at least one strand (25, 30) is produced by at least one dispenser device (32) and curing device (33) that are moved together around the in each case stationary drum (18, 19, 20).

**5.** Method according to one of Claims 2 to 4, **characterized in that** at least one profiled strand (25, 30), preferably a shallow strand whose width corresponds to 2 to 5 times the thickness or height of the respective strand (25, 30), is produced by the at least one dispenser device (32).

**6.** Method according to one of the preceding claims, **characterized in that**, after the application of the at least one encircling strand (25, 30) to the lateral surface (26) of the respective drum (18, 19, 20), the curing of the strand (25, 30) is refrained from until the strand (25, 30), as a result of flow or creepage, hugs the preferably cylindrical lateral surface (26) of the respective drum (18, 19, 20).

**7.** Method according to one of the preceding claims, **characterized in that**, after the curing, the at least one encircling strand (25, 30) is in a state of having undergone a flow process such as to have a circular-segment-like cross section.

**8.** Method according to one of the preceding claims, **characterized in that** all or only selected drums (18, 19, 20), preferably a drive drum or at least one deflecting drum, are provided with in each case at least one strand (25, 30) which is assigned to each circulating transporting belt (21, 28).

**9.** Continuous conveyor for laundry machines, having at least two drums (18, 19, 20) and having at least one circulating transporting belt (21, 28), which is guided around the drums (18, 19, 20), and having at least one guide and/or alignment element for the at least one transport belt (21, 28), which at least one guide and/or alignment element is assigned to at least one drum (18, 19, 20), **characterized in that** the at least one guide and/or alignment element is formed by at least one encircling strand (25, 30), composed of a curable material, that has been applied externally to a lateral surface (26) of at least one drum (18, 19, 20), and, following the application of said at least one encircling strand (25, 30) to the lateral surface (26) of the at least one drum (18, 19, 20), it is cured.

**10.** Continuous conveyor according to Claim 9, **characterized in that** the or each encircling strand (23, 30) externally surrounds the or the respective drum (18, 19, 20) without interruptions and/or with the same cross section.

**11.** Continuous conveyor according to Claim 9 or 10, **characterized in that** an exposed outer side of the or each strand (23, 30) is outwardly arched transversely to the circumferential direction of the drum (18, 19, 20) that has the respective strand (23, 30).

**12.** Continuous conveyor according to one of Claims 9 to 11, **characterized in that**, after being cured, the at least one strand (25, 30) is permanently fixedly connected, in particular so as to be non-displaceable and non-rotatable, to the lateral surface (26) of the or the respective drum (18, 19, 20) by way of adhesion and/or shrinkage.

**13.** Continuous conveyor according to one of Claims 9 to 12, **characterized in that**, after being cured, the or each strand (25, 30) has a circular-segment-like cross section, preferably with a width which corresponds to 2 to 5 times the thickness or height of the respective cured strand (25, 30).

**14.** Continuous conveyor according to one of Claims 9 to 13, **characterized in that** multiple transporting belts (21, 28), preferably of equal width, are guided around the at least two drums (18, 19, 20) with in particular interspaces or gaps (22, 29) between adjacent transporting belts (21, 28), and each transporting belt (21, 28) is assigned, preferably centrally, at least one encircling strand (25, 30) on the lateral surface (26) of at least one of the drums (18, 19, 20).

**15.** Continuous conveyor according to one of Claims 9 to 14, **characterized in that** the drums (18, 19, 20) are in the form of a drive drum and at least one deflecting drum and, in the case of the upper run (24, 31) of the respective transport belt (21, 28) being pulled in the running direction (23), the at least one strand (25, 30) assigned to the transporting belt (21, 28) is assigned at least to the drive drum, or, in the case of the upper run (24, 31) of the respective transporting belt (21, 28) being pushed, the at least one strand (25, 30) assigned to the transporting belt (21, 28) is assigned to at least one deflecting drum, preferably to all the deflecting drums.

**Revendications**

**1.** Procédé de fabrication d'organes de guidage et/ou d'alignement d'au moins une courroie de transport (21, 28), guidée sans fin autour de surfaces d'enveloppe (26) d'au moins deux tambours (18, 19, 20), de convoyeurs continus (16, 27) de machines de blanchisserie, **caractérisé en ce que,** pour la formation des organes de guidage et/ou d'alignement, au moins un cordon périphérique (25, 30) en un matériau durcissable fluide et/ou pâteux est appliqué sur la surface d'enveloppe (26) d'au moins un tambour (18, 19, 20) et, après l'application de l'au moins un cordon périphérique (25, 30) sur la surface d'enveloppe (26) de l'au moins un tambour (18, 19, 20), cet au moins un cordon périphérique (25, 30) est durci.

**2.** Procédé selon la revendication 1, **caractérisé en ce qu'**à l'extérieur, autour du tambour respectif (18, 19, 20), de préférence orientés radialement, au moins un dispositif de distribution (32) pour produire l'au moins un cordon (25, 30) et au moins un dispositif de durcissement (33) sont agencés de manière décalée l'un par rapport à l'autre, notamment avec un décalage angulaire.

**3.** Procédé selon la revendication 1 ou 2, **caractérisé en ce que** le tambour (18, 19, 20) devant être pourvu d'au moins un cordon périphérique (25, 30) est entraîné en rotation lente, de préférence à moins de 6 tours par minute, pendant l'application et/ou le durcissement de l'au moins un cordon (25, 30).

**4.** Procédé selon l'une quelconque des revendications 2 ou 3, **caractérisé en ce que** l'au moins un cordon (25, 30) est produit par au moins un dispositif de distribution (32) et un dispositif de durcissement (33) déplacés ensemble autour du tambour (18, 19, 20) respectivement immobile.

**5.** Procédé selon l'une quelconque des revendications 2 à 4, **caractérisé en ce que** l'au moins un dispositif de distribution (32) produit au moins un cordon profilé (25, 30), de préférence un cordon plat, dont la largeur correspond à 2 à 5 fois l'épaisseur ou la hauteur du cordon concerné (25, 30).

**6.** Procédé selon l'une quelconque des revendications précédentes, **caractérisé en ce qu'**après l'application de l'au moins un cordon périphérique (25, 30) sur la surface d'enveloppe (26) du tambour respectif (18, 19, 20), on attend pour le durcissement du cordon (25, 30) jusqu'à ce que le cordon (25, 30) se soit conformé par écoulement ou fluage à la surface d'enveloppe (26), de préférence cylindrique, du tambour respectif (18, 19, 20).

**7.** Procédé selon l'une quelconque des revendications précédentes, **caractérisé en ce que** l'au moins un cordon périphérique (25, 30) s'est écoulé après le durcissement de telle sorte qu'il présente une section transversale qui est en forme de segment de cercle.

**8.** Procédé selon l'une quelconque des revendications précédentes, **caractérisé en ce que** tous les tambours (18, 19, 20) ou seulement des tambours sélectionnés, de préférence un tambour d'entraînement ou au moins un tambour de renvoi, sont pourvus respectivement d'au moins un cordon (25, 30) associé à chaque courroie de transport périphérique (21, 28).

9. Convoyeur continu pour machines de blanchisserie, avec au moins deux tambours (18, 19, 20) et au moins une courroie de transport périphérique (21, 28) guidée autour des tambours (18, 19, 20) et au moins un organe de guidage et/ou d'alignement associé à au moins un tambour (18, 19, 20) pour l'au moins une courroie de transport (21, 28), **caractérisé en ce que** l'au moins un organe de guidage et/ou d'alignement est formé par au moins un cordon périphérique (25, 30) en un matériau durcissable appliqué à l'extérieur sur une surface d'enveloppe (26) d'au moins un tambour (18, 19, 20) et, après l'application de cet au moins un cordon périphérique (25, 30) sur la surface d'enveloppe (26) de l'au moins un tambour (18, 19, 20), un durcissement de celui-ci a lieu.

10. Convoyeur continu selon la revendication 9, **caractérisé en ce que** le ou chaque cordon périphérique (23, 30) entoure à l'extérieur le ou les tambours respectifs (18, 19, 20) de manière ininterrompue et/ou avec la même section transversale.

11. Convoyeur continu selon la revendication 9 ou 10, **caractérisé en ce qu'**un côté extérieur libre du ou de chaque cordon (23, 30) est bombé vers l'extérieur transversalement à la direction circonférentielle du tambour (18, 19, 20) présentant le cordon respectif (23, 30) .

12. Convoyeur continu selon l'une quelconque des revendications 9 à 11, **caractérisé en ce qu'**après le durcissement, l'au moins un cordon (25, 30) est relié solidement et durablement, notamment sans possibilité de déplacement et de rotation, à la surface d'enveloppe (26) du ou des tambours respectifs (18, 19, 20) par collage et/ou par rétraction.

13. Convoyeur continu selon l'une quelconque des revendications 9 ou 12, **caractérisé en ce que** le ou chaque cordon (25, 30) présente, après le durcissement, une section transversale en forme de segment de cercle, de préférence avec une largeur qui correspond à 2 à 5 fois l'épaisseur ou la hauteur du cordon durci respectif (25, 30) .

14. Convoyeur continu selon l'une quelconque des revendications 9 à 13, **caractérisé en ce que** plusieurs courroies de transport (21, 28), de préférence de même largeur, sont guidées autour des au moins deux tambours (18, 19, 20), avec notamment des espaces intermédiaires ou des interstices (22, 29) entre des courroies de transport voisines (21, 28), et à chaque courroie de transport (21, 28) est associé, de préférence au milieu, au moins un cordon périphérique (25, 30) sur la surface d'enveloppe (26) d'au moins un des tambours (18, 19, 20).

15. Convoyeur continu selon l'une quelconque des revendications 9 à 14, **caractérisé en ce que** les tambours (18, 19, 20) sont réalisés sous la forme d'un tambour d'entraînement et d'au moins un tambour de renvoi et, lorsque le brin supérieur (24, 31) de la courroie de transport respective (21, 28) est tiré dans le sens de marche (23), l'au moins un cordon (25, 30) associé à la courroie de transport (21, 28) est associé au moins au tambour d'entraînement ou, lorsque le brin supérieur (24, 31) de la courroie de transport respective (21, 28) est poussé, l'au moins un cordon (25, 30) associé à la courroie de transport (21, 28) est associé à au moins un tambour de renvoi, de préférence à tous les tambours de renvoi.

Fig. 1

Fig. 2

EP 3 970 958 B1

Fig. 3

Fig. 4

Fig. 5

EP 3 970 958 B1

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016102157 B4

- DE 3148413 A1